# EUROPEAN PATENT SPECIFICATION

(11) **EP 3 330 073 B1**
(45) Date of publication and mention of the grant of the patent: **18.03.2020**
(21) Application number: 16830492.1
(22) Date of filing: 25.07.2016
(51) Int. Cl.: B32B 38/08, B32B 33/00, B32B 5/18, B29C 41/18, B32B 27/30, B32B 27/40

(54) **METHOD FOR PRODUCING LAMINATE**
VERFAHREN ZUR HERSTELLUNG EINES LAMINATS
PROCÉDÉ DE PRODUCTION D'UN STRATIFIÉ

(30) Priority: 29.07.2015 JP 2015149435
(43) Date of publication of application: 06.06.2018
(73) Proprietor: Zeon Corporation, Tokyo 100-8246 (JP)
(72) Inventor: FUJIWARA, Takanori, Tokyo 100-8246 (JP)
(74) Representative: Maiwald Patent- und Rechtsanwaltsgesellschaft mbH
(86) International application number: PCT/JP2016/071762
(87) International publication number: WO 2017/018387

(56) References cited:
- JP-A- S6 222 682
- JP-A- H06 136 173
- JP-A- H08 208 944
- JP-A- S63 242 606
- JP-A- 2013 119 688
- JP-A- 2015 136 827

## Description

### Technical Field

The present invention relates to methods for producing a laminate that is formed by laminating a sheet-type molded body and a polyurethane foam layer, which is used for an automotive instrument panel, etc.

### Background Art

An automotive instrument panel has the structure that a polyurethane foam layer is provided between: a skin constituted by synthetic resin such as vinyl chloride resin, thermoplastic urethane resin, and thermoplastic olefin resin, or hides and leather; and a base material.

A skin of an automotive instrument panel is sometimes sewed to form a pattern of stitches or the like in order to improve design qualities and commercial value. In this case, there is a problem that when a polyurethane foam layer is formed over the back side of a skin, raw material of the polyurethane foam layer, etc. leak from holes of sewed portions to the surface side. Places where the raw material of the polyurethane foam layer, etc. leak change their color, which is a cause of spoiling appearance of an automotive instrument panel.

As a method for preventing leakage of raw material etc. when a polyurethane foam layer is formed over the back side of a skin, for example, Patent Literature 1 discloses that in order to prevent a foaming agent etc. from leaking from holes of stitches of a skin member constituted by a plastic sheet of vinyl chloride or the like, the holes of the stitches are sealed up by a method of attaching tape for sealing to the back side of the skin member, a method of carrying out crosslinking curing treatment of applying and drying an adhesive, a method of heating resin yarn on the back side, to melt the yarn when the stitches are the resin yarn, and so on. Patent Literature 2 discloses that a sewing place of a thermoplastic resin material of a molten condition is sewed with an upper thread and a lower thread, and cured, to integrate the thermoplastic resin material, the upper thread, and the lower thread, thereby gaps between the outer peripheral surfaces of the sewing threads with which the resin material is sewed and the resin material can be sealed.

### Citation List

### Patent Literature

Patent Literature 1: JPH3-1938A
Patent Literature 2: JP2014-19060A
Patent Literature 3: US 2015/0202839 A1

### Summary of Invention

### Technical Problem

Patent Literatures 1 and 2 need a complex process of sealing sewed portions in order to prevent polyurethane from leaking from the sewed portions. Patent Literature 2 discloses a method of successively meting a sewing place to be sewed sequentially with operation of a sewing device, and sewing the sewing place with sewing threads. This method requires a special apparatus of heating the sewing device etc., which arises a problem of high cost.

An object of the present invention is to provide a method for producing a laminate which can easily prevent leakage of polyurethane from sewed portions at low cost, in a step of laminating a sewed sheet-type molded body and a polyurethane foam layer.

### Solution to Problem

The inventor of the present invention completed the following invention as a result of his intensive research for solving the above described problems. That is,
the present invention is a method for producing a laminate, the method comprising: sewing a sheet using thread; impregnating at least part of the thread with liquid before, after, or during said sewing; and laminating a polyurethane foam layer to at least one surface of a sheet-type molded body that is obtained by said sewing and said impregnating.

In said impregnating comprised in the producing method of the present invention, preferably, at least part of the thread is impregnated with the liquid, the part being in the vicinity of at least a portion of the sheet-type molded body, the portion through which the thread is to penetrate/penetrates/is penetrating.

Here, "the vicinity of ... the portion through which the thread is to penetrate/penetrates/is penetrating" includes a portion of the thread which is to penetrate/penetrates/is penetrating through the sheet in the thickness direction of the sheet-type molded body, and/or a portion protruding as much as the thickness of the thread from the above included portion in a direction parallel to the thickness direction of the sheet-type molded body.

In the present invention, preferably, said impregnating is carried out before said sewing.

The present invention may comprise, after said laminating, removing at least part of the liquid with which the thread is impregnated.

Preferably, a resin composition for powder molding is subjected to powder slush molding, to be the sheet of the present invention.

In the present invention, preferably, the resin composition for powder molding is a vinyl chloride resin composition for powder molding which contains vinyl chloride resin.

In the present invention, preferably, an average degree of polymerization of the vinyl chloride resin is 800 to 5000.

In the present invention, preferably, the resin composition for powder molding contains 30 to 200 parts by mass of a plasticizer, to 100 parts by mass of the vinyl chloride resin.

In the present invention, the boiling point of the liquid is 150 to 1000°C. Examples of liquids whose boiling points are within the above range include plasticizers. The impregnation rate of the liquid for the thread is preferably 0.1 to 50%. "Impregnation rate" in the present invention shows the rate of the weight of the liquid with which the thread is impregnated, to the total weight of the thread after the thread is impregnated with the liquid.

In the present invention, the thread may consist of upper thread and lower thread. In this case, in said impregnating, at least part of the lower thread is preferably impregnated with the liquid. "Upper thread" here is thread arranged on the side opposite to the side where the polyurethane foam layer is laminated, and "lower thread" is thread arranged on the side where the polyurethane foam layer is laminated.

### Advantageous Effects of Invention

The method for producing a laminate of the present invention makes it possible to easily prevent leakage of polyurethane foam of a polyurethane foam layer from sewed portions of a sheet-type molded body at low cast even if the sewed sheet-type molded body and the polyurethane foam layer are laminated.

### Brief Description of Drawings

Fig. 1 is an explanatory flowchart of one embodiment of the method for producing a laminate according to the present invention.
Fig. 2 is a perspective view of a laminate 10 obtained by one embodiment of the method for producing a laminate according to the present invention.
Fig. 3 is a cross-sectional view of sewed portions of the laminate 10 obtained by one embodiment of the method for producing a laminate according to the present invention, taken along the line II-II in Fig. 2.

### Description of Embodiments

The above described effect and advantage of the present invention are made clear by the embodiment for realizing the invention described as follows. The present invention will be described below based on the embodiment shown in the drawings. The present invention is not limited to this embodiment. The following drawings are schematic views of the structure, and do not accurately show the size and shape of each component.

The present invention is a method for producing a laminate, the method comprising: sewing a sheet using thread; impregnating at least part of the thread with liquid before, after, or during said sewing; and laminating a polyurethane foam layer to at least one surface of a sheet-type molded body that is obtained by said sewing and said impregnating.

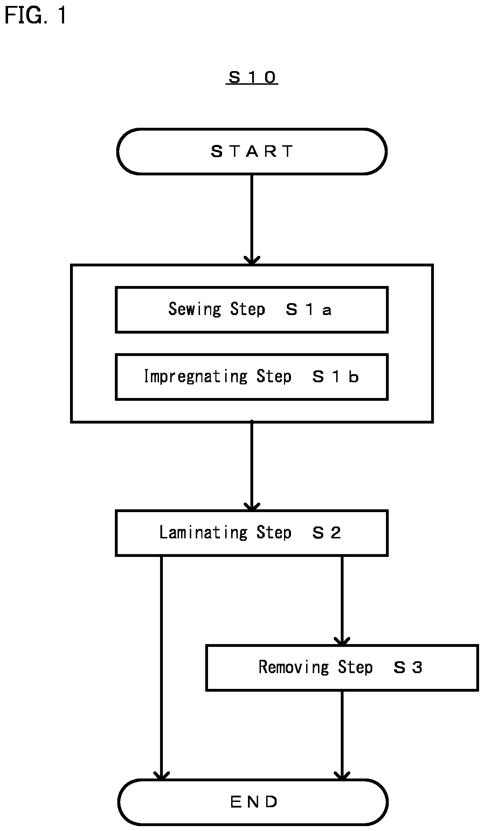

Hereinafter the method for producing a laminate of the present invention will be described in detail with reference to Figs. 1 to 3.

Fig. 1 is an explanatory flowchart of the method for producing a laminate S10 of the present invention (hereinafter may be referred to as "producing method S10 of the present invention"). As shown in Fig. 1, the producing method S10 of the present invention includes a sewing step S1a, an impregnating step S1b, and a laminating step S2. The producing method S10 of the present invention may include a removing step S3 of removing liquid.

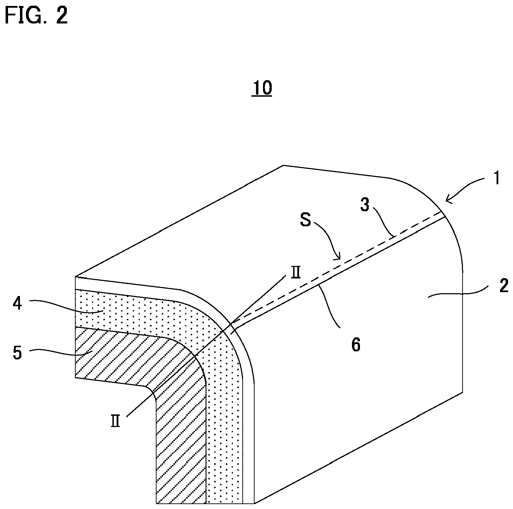

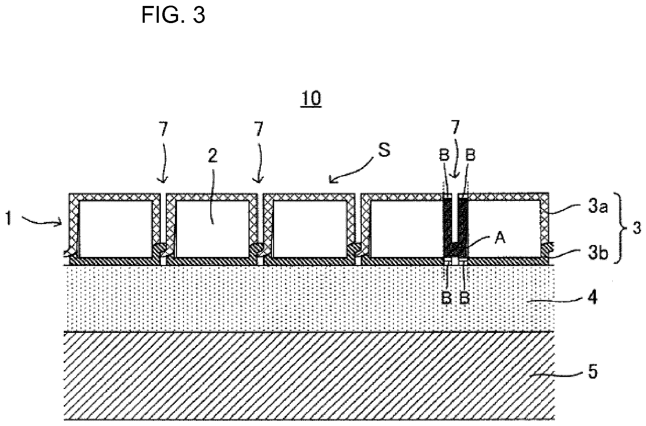

Fig. 2 is a perspective view of a laminate 10 obtained by the producing method S10 of the present invention (hereinafter may be referred to as "laminate 10"). As shown in Fig. 2, the laminate 10 has the structure of laminating a sheet-type molded body 1 formed by sewing (stitches S) on a sheet 2 using thread 3, a polyurethane foam layer 4, and a base material 5 in this order. A recessed groove 6 is formed on the laminate 10 along the stitches S for the purpose of giving such beauty that it is as if skins constituted by the sheet-type molded bodies 1 were sewed together. As shown in the cross-sectional view in Fig. 3, the thread 3 consists of upper thread 3a and lower thread 3b. The sheet 2 is lockstitched using the upper thread 3a and the lower thread 3b, to make the stitches S. As shown in Fig. 3, the upper thread 3a constitutes part of a designing face of the laminate 10 (that is a face visually recognized from the outside when the laminate 10 is disposed. Hereinafter the same will be applied) on the laminate 10, and plays a role of improving design qualities of the laminate 10. On the other hand, the lower thread 3b is usually not recognized from the outside. The lower thread 3b is arranged on the side where the polyurethane foam layer 4 is laminated, and plays a major role in preventing leakage of raw material etc. from sewed portions 7 when the polyurethane foam layer 4 is laminated.

Hereinafter, each step in Fig. 1 will be described.

### (Sewing Step S1a)

The sewing step S1a is a step of sewing the sheet 2 using the thread 3, to add stitches to the sheet 2. Sewing makes it possible to improve design qualities and commercial value of the laminate 10.

Any material can be used as the material of forming the thread 3 without limitation as long as being able to be impregnated with liquid. Examples thereof include polyester fiber, polyamide fiber, and natural fiber.

Sewing in the present invention is generally carried out using a sewing machine. However, a way of carrying out sewing is not restricted. If a sewing machine is used, for example, the way of carrying out sewing with one thread may be employed while the thread 3 consists of the upper thread 3a and the lower thread 3b.

Material of the sheet 2 used in the present invention is not restricted. Vinyl chloride resin, thermoplastic urethane resin, thermoplastic olefin resin, and hides and leather can be listed as the material. Among them, material that a resin composition for powder molding is subjected to powder slush molding, to obtain is preferable in view of excellent moldability, and small dependence on oil and low environmental burdens.

As a resin composition for powder molding used in powder slush molding, resin compositions containing vinyl chloride resin (PVC), urethane resin (TPU), olefin resin such as ethylene (TPO), and the like can be given. Among them, a vinyl chloride resin composition for powder molding containing vinyl chloride resin is preferably used.

Here, the vinyl chloride resin composition for powder molding containing vinyl chloride resin will be described.

Vinyl chloride resin contained in the vinyl chloride resin composition for powder molding (a) preferably includes a vinyl chloride resin particle whose average degree of polymerization is 800 to 5000 (a1). Vinyl chloride resin constituting the vinyl chloride resin particle (a1) includes homopolymer of vinyl chloride, and copolymer preferably containing no less than 50 mass%, and more preferably containing no less than 70 mass% of vinyl chloride units. Specific examples of comonomer for vinyl chloride copolymer include olefins such as ethylene and propylene; halogenated olefins such as allyl chloride, vinylidene chloride, vinyl fluoride, and chlorotrifluoroethylene; carboxylic acid vinyl esters such as vinyl acetate, and vinyl propionate; vinyl ethers such as isobutyl vinyl ether, and cetyl vinyl ether; allyl ethers such as allyl-3-chloro-2-oxypropyl ether, and allyl glycidyl ether; unsaturated carboxylic acids and esters or acid anhydrides thereof such as acrylic acid, maleic acid, itaconic acid, 2-hydroxyethyl acrylate, methyl methacrylate, monomethyl maleate, diethyl maleate, and maleic anhydride; unsaturated nitriles such as acrylonitrile, and methacrylonitrile; acrylamides such as acrylamide, N-methylolacrylamide, acrylamido-2-methylpropanesulfonic acid, and (meth)acrylamidopropyltrimethylammonium chloride; and allylamines and derivatives thereof such as allylammonium benzoate, and diallyldimethylammonium chloride. The above monomers are only parts of monomers copolymerizable with vinyl chloride, and various monomers shown in The Nikkan Kogyo Shimbun, Ltd., Porienkabiniru (polyvinyl chloride), 1988, edited by Division of Polymer Sciences, Kinka Chemical Society, Japan, pages 75 to 104 can be used. One or at least two monomer(s) among them can be used. Vinyl chloride resin constituting the above described vinyl chloride resin particle (a1) also includes resin obtained by graft-polymerizing resin such as ethylene-vinyl acetate copolymer, ethylene-methyl methacrylate copolymer, ethylene-ethyl acrylate copolymer, and chlorinated polyethylene with (1) vinyl chloride, or (2) vinyl chloride, and the above described copolymerizable monomer.

The vinyl chloride resin (a) constituting the above described vinyl chloride resin particle (a1) can be produced by any conventionally known producing method such as suspension polymerization, emulsion polymerization, solution polymerization, and bulk polymerization. In particular, vinyl chloride resin produced by suspension polymerization is preferable.

The average degree of polymerization of the above described vinyl chloride resin particle (a1) is preferably 800 to 5000, more preferably 800 to 3000, and further preferably 800 to 2000. The average degree of polymerization is measured confirming to JIS K 6720-2.

The average particle size of the above described vinyl chloride resin particle (a1) is not particularly limited, and is preferably 50 µm to 500 µm, more preferably 50 µm to 250 µm, and further preferably 100 µm to 200 µm. The average particle size of the vinyl chloride resin particle (a1) within the above range leads to improved powder flowability of the vinyl chloride resin composition for powder molding, and improved smoothness of a vinyl chloride resin molded body that the above described vinyl chloride resin composition for powder molding is subjected to powder molding, to form. The average particle size is measured conforming to test sieving using a JIS standard sieve specified in JIS Z 8801.

The above described vinyl chloride resin (a) may contain a vinyl chloride resin fine particle (a2) if necessary. The above described vinyl chloride resin fine particle (a2) functions as a dusting agent of improving powder flowability of the vinyl chloride resin composition for powder molding.

Vinyl chloride resin constituting the above described vinyl chloride resin fine particle (a2) can be produced by any conventionally known producing method such as suspension polymerization, emulsion polymerization, solution polymerization, and bulk polymerization. In particular, vinyl chloride resin produced by emulsion polymerization is preferable.

The average degree of polymerization of the vinyl chloride resin constituting the above described vinyl chloride resin fine particle (a2) is preferably 500 to 5000, more preferably 600 to 3000, and further preferably 700 to 2500. The average degree of polymerization is measured confirming to JIS K 6720-2.

The average particle size of the above described vinyl chloride resin fine particle (a2) is preferably 0.1 µm to 10 µm because the powder flowability of the vinyl chloride resin composition for powder molding is improved. For example, the average particle size is measured conforming to JIS Z8825, by laser diffraction using "SALD-2300" manufactured by Shimadzu Corporation.

The content of the vinyl chloride resin fine particle (a2) in 100 mass% of the above described vinyl chloride resin (a) is preferably 0 to 30 mass%, more preferably 1 to 30 mass%, further preferably 5 to 25 mass%, and especially preferably 8 to 20 mass%. The content of the above described vinyl chloride resin fine particle (a2) within the above range leads to good powder flowability of the vinyl chloride resin composition for powder molding.

The above described vinyl chloride resin composition for powder molding preferably contains a plasticizer. Specific examples of plasticizers include trimellitates such as tri-n-hexyl trimellitate, tri-n-heptyl trimellitate, tri-n-octyl trimellitate, tri-(2-ethylhexyl) trimellitate, tri-n-nonyl trimellitate, tri-n-decyl trimellitate, triisodecyl trimellitate, tri-n-undecyl trimellitate, tri-n-dodecyl trimellitate, tri-n-alkyl (the carbon number of each alkyl group is any of 6 to 12) trimellitate, trialkyl (the carbon number of each alkyl group is any of 8 to 10) trimellitate, and tri-n-alkyl (the carbon number of each alkyl group is any of 8 to 10) trimellitate; pyromellitate plasticizers such as tetra-n-hexyl pyromellitate, tetra-n-heptyl pyromellitate, tetra-n-octyl pyromellitate, tetra-(2-ethylhexyl) pyromellitate, tetra-n-nonyl pyromellitate, tetra-n-decyl pyromellitate, tetraisodecyl pyromellitate, tetra-n-undecyl pyromellitate, tetra-n-dodecyl pyromellitate, and tetra-n-alkyl (the carbon number of each alkyl group is any of 6 to 12) pyromellitate; epoxidized vegetable oils such as epoxidized soybean oil, and epoxidized linseed oil; phthalic acid derivatives such as dimethyl phthalate, diethyl phthalate, dibutyl phthalate, di-(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, benzyl butyl phthalate, dinonyl phthalate, and dicyclohexyl phthalate; isophthalic acid derivatives such as dimethyl isophthalate, di-(2-ethylhexyl) isophthalate, and diisooctyl isophathalate; tetrahydrophthalic acid derivatives such as di-(2-ethylhexyl) tetrahydrophthalate, di-n-octyl tetrahydrophthalate, and diisodecyl tetrahydrophthalate; adipic acid derivatives such as di-n-butyl adipate, di-(2-ethylhexyl) adipate, diisodecyl adipate, and diisononyl adipate; azelaic acid derivatives such as di-(2-ethylhexyl) azelate, diisooctyl azelate, and di-n-hexyl azelate; sebacic acid derivatives such as di-n-butyl sebacate, di-(2-ethylhexyl) sebacate, diisodecyl sebacate, and di-(2-butyloctyl) sebacate; maleic acid derivatives such as di-n-butyl maleate, dimethyl maleate, diethyl maleate, and di-(2-ethylhexyl) maleate; fumaric acid derivatives such as di-n-butyl fumarate, and di-(2-ethylhexyl) fumarate; citric acid derivatives such as triethyl citrate, tri-n-butyl citrate, acetyl triethyl citrate, and acetyl tri-(2-ethylhexyl) citrate; itaconic acid derivatives such as monometyl itaconate, monobutyl itaconate, dimethyl itaconate, diethyl itaconate, dibutyl itaconate, and di-(2-ethylhexyl) itaconate; oleic acid derivatives such as butyl oleate, glyceryl monooleate, and diethylene glycol monooleate; ricinoleic acid derivatives such as methyl acetylricinoleate, butyl acetylricinoleate, glyceryl monoricinoleate, and diethylene glycol monoricinoleate; stearic acid derivatives such as n-butyl stearate, and diethylene glycol distearate; other fatty acid derivatives such as diethylene glycol monolaurate, diethylene glycol dipelargonate, and pentaerythritol fatty acid ester; phosphoric acid derivatives such as triethyl phosphate, tributyl phosphate, tri-(2-ethylhexyl) phosphate, tributoxyethyl phosphate, triphenyl phosphate, cresyl diphenyl phosphate, tricresyl phosphate, trixylenyl phosphate, and tris(chloroethyl) phosphate; glycol derivatives such as diethylene glycol dibenzoate, dipropyrene glycol dibenzoate, triethylene glycol dibenzoate, triethylene glycol di-(2-ethylbutylate), triethylene glycol di-(2-ethylhexanoate), and dibutyl methylene bis(thioglycolate); glycerin derivatives such as glycerol monoacetate, glycerol triacetate, and glycerol tributylate; epoxy derivatives such as epoxy hexahydro diisodecyl phthalate, epoxy triglyceride, epoxidized octyl oleate, and epoxidized decyl oleate; so-called primary plasticizers such as polyester plasticizers including adipate polyesters, sebacate polyesters, and phthalate polyesters; and so-called secondary plasticizers such as chlorinated paraffin, fatty acid esters of glycol such as triethylene glycol dicaprylate, butyl epoxy stearate, phenyl oleate, and methyl dihydroabietate. One or at least two plasticizer(s) may be used. When a secondary plasticizer is used, a primary plasticizer whose mass is equal to or larger than that of the secondary plasticizer is preferably used together.

The content of the above described plasticizer, to 100 parts by mass of the vinyl chloride resin (a) is preferably 30 to 200 parts by mass, more preferably 60 to 170 parts by mass, and further preferably 90 to 160 parts by mass. The content of the above described plasticizer within the above range leads to good absorbency of the vinyl chloride resin (a) for the plasticizer, and good powder moldability of the vinyl chloride resin composition for powder molding.

The vinyl chloride resin composition for powder molding may contain perchloric acid-treated hydrotalcite as a stabilizer. Perchloric acid-treated hydrotalcite can be easily produced by, for example, adding and stirring hydrotalcite into a dilute aqueous solution of perchloric acid, and thereafter filtering, dehydrating, or drying the resultant as necessary, to substitute perchlorate anions (ClO₄⁻) for at least a part of carbonate anions (CO₃²⁻) in hydrotalcite (substitute 2 mol of perchlorate anions for 1 mol of carbonate anions). Any molar ratio between the above described hydrotalcite and perchloric acid can be set, and generally, the molar ratio is 0.1 to 2 mol of perchloric acid, to 1 mol of hydrotalcite.

The proportion of carbonate anions in untreated (unsubstituted) hydrotalcite for which perchlorate anions are to be substituted is preferably no less than 50 mol%, more preferably no less than 70 mol%, and further preferably no less than 85 mol%; and preferably no more than 95 mol%.

Hydrotalcite is a non-stoichiometric compound represented by the general formula: [Mg₁₋ₓAlₓ(OH)₂]^{x+}[(CO₃)_{x/2}·mH₂O]^{x-}, and is an inorganic substance having a layered crystal structure composed of a positively charged basic layer of [Mg₁₋ₓAlₓ(OH)₂]^{x+}, and a negatively charged intermediate layer of [(CO₃)_{x/2}·mH₂O]^{x-}. Here, x represents a number that is greater than 0 and no more than 0.33. Natural hydrotalcite is represented by Mg₆Al₂(OH)₁₆CO₃·4H₂O. Synthetic hydrotalcite represented by Mg_{4.5}Al₂(OH)₁₃CO₃·3.5H₂O is commercially available. A method of synthesizing synthetic hydrotalcite is described in JPS61-174270A.

The content of perchloric acid-treated hydrotalcite, to 100 parts by mass of the vinyl chloride resin for powder molding is preferably 0.5 to 7 parts by mass, more preferably 1 to 6 parts by mass, and further preferably 1.5 to 5.5 parts by mass.

The above described vinyl chloride resin composition for powder molding may contain zeolite as a stabilizer. Zeolite is represented by the general formula: M_{x/n}·[(AlO₂)ₓ·(SiO₂)_{y}]·zH₂O (in the formula, M is a metal ion of a valence of n, x + y equals the number of tetrahedra per unit cell, and z is the number of moles of water). As a metal of M in the general formula, monovalent or divalent metals such as Na, Li, Ca, Mg, and Zn, and mixtures thereof can be given.

The content of zeolite is not restricted to any specific range. Preferred content thereof is 0.1 to 5 parts by mass, to 100 parts by mass of the vinyl chloride resin (a).

The above described vinyl chloride resin composition for powder molding may contain a fatty acid metallic salt as a stabilizer. As this fatty acid metallic salt, a metallic salt of a monovalent fatty acid is preferable, a metallic salt of a monovalent fatty acid having a carbon number of 12 to 24 is more preferable, and a metallic salt of a monovalent fatty acid having a carbon number of 15 to 21 is further preferable. Specific examples of fatty acid metallic salts include lithium stearate, magnesium stearate, aluminum stearate, calcium stearate, strontium stearate, barium stearate, zinc stearate, calcium laurate, barium laurate, zinc laurate, barium 2-ethylhexanoate, zinc 2-ethylhexanoate, barium ricinoleate, and zinc ricinoleate. Metal composing the fatty acid metallic salt is preferably metal that can produce polyvalent cations, more preferably metal that can produce divalent cations, further preferably metal in the third to sixth periods of the periodic table which can produce divalent cations, and particularly preferably metal in the fourth period of the periodic table which can produce divalent cations. The fatty acid metallic salt is most preferably zinc stearate.

The content of a fatty acid metallic salt, to 100 parts by mass of the vinyl chloride resin (a) is preferably 0.05 to 5 parts by mass, more preferably 0.1 to 1 part by mass, and further preferably 0.1 to 0.5 parts by mass. The content of a fatty acid metallic salt within the above range makes it possible to lessen a value of color difference in a vinyl chloride resin layer that the vinyl chloride resin composition for powder molding is subjected to powder molding, to form.

The above described vinyl chloride resin composition for powder molding may contain a dusting agent other than the vinyl chloride resin fine particle (a2) (hereinafter, may be also referred to as "another dusting agent"). Examples of another dusting agent include inorganic fine particles such as calcium carbonate, talc, and aluminum oxide; and organic fine particles such as polyacrylonitrile resin fine particles, poly(meth)acrylate resin fine particles, polystyrene resin fine particles, polyethylene resin fine particles, polypropylene resin fine particles, polyester resin fine particles, and polyamide resin fine particles. Among them, inorganic fine particles whose average particle size is 10 nm to 100 nm are preferable.

The content of another dusting agent is not limited to a specific range. The content thereof is preferably no more than 20 parts by mass, and further preferably no more than 10 parts by mass, to 100 parts by mass of the vinyl chloride resin (a).

The above described vinyl chloride resin composition for powder molding may contain other additives such as coloring agents, impact modifiers, perchloric acid compounds other than perchloric acid-treated hydrotalcite (for example, sodium perchlorate, and potassium perchlorate), antioxidants, fungicides, flame retardants, antistatic agents, fillers, light stabilizers of ultraviolet absorption etc., foaming agents, and β-diketones.

Specific examples of coloring agents include quinacridone-based pigments, perylene-based pigments, condensed polyazo pigments, isoindolinone-based pigments, copper phthalocyanine-based pigments, titanium white, and carbon black. One or at least two pigment(s) may be used. A quinacridone-based pigment is obtained through concentrated sulfuric acid treatment on a p-phenylene dianthranilic acid, and has a hue from yellowish red to reddish purple. Specific examples of quinacridone-based pigments include quinacridone red, quinacridone magenta, and quinacridone violet. A perylene-based pigment is obtained through condensation reaction of perylene-3,4,9,10-tetracarboxylic anhydride and an aromatic primary amine, and has a hue from red to red-purple or brown. Specific examples of perylene-based pigments include perylene red, perylene orange, perylene maroon, perylene vermilion, and perylene bordeaux. A condensed polyazo pigment is obtained through condensation of an azo dye in a solvent, to make the azo dye have a high molecular weight, and has a hue of a yellow or red pigment. Specific examples of condensed polyazo pigments include polyazo red, polyazo yellow, chromophthal orange, chromophthal red, and chromophthal scarlet. An isoindolinone-based pigment is obtained through condensation reaction of 4,5,6,7-tetrachloroisoindolinone and an aromatic primary diamine, and has a hue from greenish yellow to red or brown. Specific examples of isoindolinone-based pigments include isoindolinone yellow. A copper phthalocyanine-based pigment is a pigment in which copper is coordinated to a phthalocyanine, and has a hue from yellowish green to bright blue. Specific examples of copper phthalocyanine-based pigments include phthalocyanine green, and phthalocyanine blue. Titanium white is a white pigment constituted by titanium dioxide. Titanium white has high opacity, and exists in an anatase form and a rutile form. Carbon black is a black pigment having carbon as the main component, and also including oxygen, hydrogen, and nitrogen. Specific examples of carbon black include thermal black, acetylene black, channel black, furnace black, lamp black, and bone black.

Specific examples of impact modifiers include acrylonitrile-butadiene-styrene copolymers, methyl methacrylate-butadiene-styrene copolymers, chlorinated polyethylene, ethylene-vinyl acetate copolymers, and chlorosulfonated polyethylene. One or at least two impact modifier(s) may be used. An impact modifier becomes a heterogeneous phase of fine elastic particles in the vinyl chloride resin composition for powder molding, to disperse. When the above described vinyl chloride resin composition for powder molding contains the vinyl chloride resin particle (a1), a chain and a polar group which are graft-polymerized with this elastic particle are compatiblilized with the vinyl chloride resin particle (a1), which improves impact resistance of the vinyl chloride resin layer.

Specific examples of antioxidants include phenolic antioxidants, sulfuric antioxidants, and phosphoric antioxidants.

Specific examples of fungicides include aliphatic ester-based fungicides, hydrocarbon-based fungicides, organic nitrogen-based fungicides, and organic nitrogen sulfur-based fungicides.

Specific examples of flame retardants include halogen-containing flame retardants such as chlorinated paraffin; phosphoric flame retardants such as phosphoric acid ester; and inorganic hydroxides such as magnesium hydroxide, and aluminum hydroxide.

Specific examples of antistatic agents include anionic antistatic agents such as fatty acid salts, higher alcohol sulfuric acid esters, and sulfonic acid salts; cationic antistatic agents such as aliphatic amine salts, and quaternary ammonium salts; and non-ionic antistatic agents such as polyoxyethylene alkyl ethers, and polyoxyethylene alkyl phenol ethers.

Specific examples of fillers include silica, talc, mica, calcium carbonate, and clay.

Specific examples of light stabilizers include ultraviolet absorbers based on benzotriazole, benzophenone, nickel chelate, etc., and hindered amine light stabilizers.

Specific examples of foaming agents include organic foaming agents such as azo compounds including azodicarbonamide, and azobisisobutyronitrile, nitroso compounds including N,N'-dinitrosopentamethylenetetramine, and sulfonyl hydrazide compounds including p-toluenesulfonyl hydrazide, and p,p-oxybis(benzenesulfonyl hydrazide); chlorofluorocarbons, carbon dioxide gas, water, volatile hydrocarbon compounds such as pentane; and gaseous foaming agents such as microcapsules in which the above are encapsulated.

A β-diketone can be used as a stabilizer to more effectively suppress variation in the initial color tone of the vinyl chloride resin layer that the above described vinyl chloride resin composition for powder molding is subjected to powder molding, to obtain. Specific examples of β-diketones include dibenzoylmethane, stearoylbenzoylmethane, and palmitoylbenzoylmethane. One β-diketone may be used individually, or at least two β-diketones may be used in combination.

The content of a β-diketone is not limited to a specific range. The content thereof is preferably 0.1 to 5 parts by mass, to 100 parts by mass of the vinyl chloride resin (a).

A method of mixing the vinyl chloride resin (a), and additives added as necessary is not specifically limited. A preferred mixing method is to mix components other than a plasticizer and a dusting agent (vinyl chloride resin fine particle (a2)) by dry blending, and then mixing a plasticizer and a dusting agent in order. A Henschel mixer is preferably used for the dry blending. Temperature at the dry blending is preferably 50 to 100°C, and more preferably 70 to 80°C.

The sheet 2 of the present invention is preferably obtained by powder molding on the above described resin composition for powder molding, more preferably by powder slush molding on the above described vinyl chloride resin composition for powder molding. The temperature of a mold in the powder slush molding is preferably 200°C to 300°C, and more preferably 220°C to 280°C. The sheet 2 can be preferably obtained by: sprinkling the above described resin composition for powder molding over the mold of the above temperature range, leaving the mold to stand for 5 seconds to 30 seconds, thereafter shaking off excess of the composition, further leaving the mold to stand for 30 seconds to 3 minutes, thereafter cooling the mold to 10°C to 60°C, and detaching the resultant from the mold. The sheet 2 is preferably used as a skin for an instrument panel for an automobile, or for an automotive interior material other than an instrumental panel, such as a door trim.

The thickness of the sheet 2 is not restricted to a specific range. The thickness thereof is preferably 100 µm to 3 mm, further preferably 500 µm to 2 mm, and especially preferably 800 µm to 1.5 mm.

### (Impregnating Step S1b)

The impregnating step S1b is a step of impregnating at least part of the thread 3 with liquid, and carried out before, after, or during the sewing step S1a. Impregnation of at least part of the thread 3 with liquid makes it possible to prevent polyurethane foam of the polyurethane foam layer 4 from leaking from the sewed portions 7 of the designing face of the sheet-type molded body 1 in the laminating step S2 described below. A portion of the thread 3 impregnated with liquid is not restricted. Preferably, at least part of the thread which is in the vicinity of at least a portion of the sheet 2 through which the thread 3 is to penetrate/penetrates/is penetrating is impregnated with the liquid. Here, "the vicinity of ... a portion of the sheet 2 through which the thread 3 is to penetrate/penetrates/is penetrating" includes a portion of the thread 3 which is to penetrate/penetrates/is penetrating through the sheet 2 in the thickness direction of the sheet-type molded body 1 (for example, the portion shown by A in Fig. 3), and/or a portion protruding as much as the thickness of the thread from the above included portion in a direction parallel to the thickness direction of the sheet-type molded body (for example, the portions shown by B in Fig. 3). When the thread 3 consists of upper thread and lower thread, preferably, at least part of the lower thread is impregnated with liquid.

The impregnating step S1b is preferably carried out before the sewing step S1a. Carrying out the impregnating step S1b before the sewing step S1a makes it possible to only impregnate the thread 3 selectively with liquid. That is, an excessive side reaction of the polyurethane foam layer 4 and liquid can be prevented in the laminating step S2, which makes it possible to prevent unevenness in quality of the laminate 10 to be obtained.

A method of impregnating the thread 3 with liquid is not restricted as long as the thread 3 can be impregnated with liquid. Examples thereof include dripping liquid onto the thread 3, spraying the thread 3 with liquid, and immersing the thread 3 with liquid.

In the present invention, a boiling point of liquid with which the thread 3 is impregnated is 150 to 1000°C, and preferably 250 to 1000°C. If the producing method S10 of the present invention requires a long time, liquid of a high boiling point can be preferably used. Examples of liquids having a boiling point of the above range include plasticizers and liquid paraffin. Among them, plasticizers are preferable. "Plasticizer" here means what functioning as a plasticizer for a resin composition for molding, and preferably what functioning as a plasticizer for vinyl chloride resin. The impregnation rate of liquid in the thread 3 is preferably 0.1 to 50 wt.%, more preferably 0.5 to 45 wt.%, further preferably 3 to 45 wt.%, and especially preferably 5 to 40 wt.%.

Any plasticizers of a boiling point within the above range can be used for impregnating the thread without any limitation, which are specifically trimellitates such as tri-n-hexyl trimellitate, tri-n-heptyl trimellitate, tri-n-octyl trimellitate, tri-(2-ethylhexyl) trimellitate, tri-n-nonyl trimellitate, tri-n-decyl trimellitate, triisodecyl trimellitate, tri-n-undecyl trimellitate, tri-n-dodecyl trimellitate, tri-n-alkyl (the carbon number of each alkyl group is any of 6 to 12) trimellitate, trialkyl (the carbon number of each alkyl group is any of 8 to 10) trimellitate, and tri-n-alkyl (the carbon number of each alkyl group is any of 8 to 10) trimellitate; pyromellitate plasticizers such as tetra-n-hexyl pyromellitate, tetra-n-heptyl pyromellitate, tetra-n-octyl pyromellitate, tetra-(2-ethylhexyl) pyromellitate, tetra-n-nonyl pyromellitate, tetra-n-decyl pyromellitate, tetraisodecyl pyromellitate, tetra-n-undecyl pyromellitate, tetra-n-dodecyl pyromellitate, and tetra-n-alkyl (the carbon number of each alkyl group is any of 6 to 12) pyromellitate; epoxidized vegetable oils such as epoxidized soybean oil, and epoxidized linseed oil; phthalic acid derivatives such as dimethyl phthalate, diethyl phthalate, dibutyl phthalate, di-(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, benzyl butyl phthalate, dinonyl phthalate, and dicyclohexyl phthalate; isophthalic acid derivatives such as dimethyl isophthalate, di-(2-ethylhexyl) isophthalate, and diisooctyl isophathalate; tetrahydrophthalic acid derivatives such as di-(2-ethylhexyl) tetrahydrophthalate, di-n-octyl tetrahydrophthalate, and diisodecyl tetrahydrophthalate; adipic acid derivatives such as di-n-butyl adipate, di-(2-ethylhexyl) adipate, diisodecyl adipate, and diisononyl adipate; azelaic acid derivatives such as di-(2-ethylhexyl) azelate, diisooctyl azelate, and di-n-hexyl azelate; sebacic acid derivatives such as di-n-butyl sebacate, di-(2-ethylhexyl) sebacate, diisodecyl sebacate, and di-(2-butyloctyl) sebacate; maleic acid derivatives such as di-n-butyl maleate, dimethyl maleate, diethyl maleate, and di-(2-ethylhexyl) maleate; fumaric acid derivatives such as di-n-butyl fumarate, and di-(2-ethylhexyl) fumarate; citric acid derivatives such as triethyl citrate, tri-n-butyl citrate, acetyl triethyl citrate, and acetyl tri-(2-ethylhexyl) citrate; itaconic acid derivatives such as monometyl itaconate, monobutyl itaconate, dimethyl itaconate, diethyl itaconate, dibutyl itaconate, and di-(2-ethylhexyl) itaconate; oleic acid derivatives such as butyl oleate, glyceryl monooleate, and diethylene glycol monooleate; ricinoleic acid derivatives such as methyl acetylricinoleate, butyl acetylricinoleate, glyceryl monoricinoleate, and diethylene glycol monoricinoleate; stearic acid derivatives such as n-butyl stearate, and diethylene glycol distearate; other fatty acid derivatives such as diethylene glycol monolaurate, diethylene glycol dipelargonate, and pentaerythritol fatty acid ester; phosphoric acid derivatives such as triethyl phosphate, tributyl phosphate, tri-(2-ethylhexyl) phosphate, tributoxyethyl phosphate, triphenyl phosphate, cresyl diphenyl phosphate, tricresyl phosphate, trixylenyl phosphate, and tris(chloroethyl) phosphate; glycol derivatives such as diethylene glycol dibenzoate, dipropyrene glycol dibenzoate, triethylene glycol dibenzoate, triethylene glycol di-(2-ethylbutylate), triethylene glycol di-(2-ethylhexanoate), and dibutyl methylene bis(thioglycolate); glycerin derivatives such as glycerol monoacetate, glycerol triacetate, and glycerol tributylate; epoxy derivatives such as epoxy hexahydro diisodecyl phthalate, epoxy triglyceride, epoxidized octyl oleate, and epoxidized decyl oleate; so-called primary plasticizers such as polyester plasticizers including adipate polyesters, sebacate polyesters, and phthalate polyesters; and so-called secondary plasticizers such as chlorinated paraffin, fatty acid esters of glycol such as triethylene glycol dicaprylate, butyl epoxy stearate, phenyl oleate, and methyl dihydroabietate. One or at least two plasticizer(s) may be used. When a secondary plasticizer is used, a primary plasticizer whose mass is equal to or larger than that of the secondary plasticizer is preferably used together.

### (Laminating Step S2)

The laminating step S2 is a step of laminating the polyurethane foam layer 4 to at least one surface of the sheet-type molded body 1 that is obtained by the sewing step S1a and the impregnating step S1b.

The following ways of the laminating step S2 can be given: after making the sheet-type molded body 1 and the polyurethane foam layer 4 individually, sticking them together by thermal fusion bonding or thermal bonding, or using a known adhesive; making an isocyanate that is raw material of the polyurethane foam layer 4 react with a polyol, to polymerize them, and foaming polyurethane by a known method, to laminate the sheet-type molded body 1 and the polyurethane foam layer 4; and so on. The latter way is more preferable because having simpler steps, and making it possible to surely bond the sheet-type molded body 1 and the polyurethane foam layer 4 of the present invention together in a case where even laminates of various shapes are obtained. When the polyurethane foam layer 4 is laminated to the sheet-type molded body 1 by the latter method, a member that covers the sewed portions (for example, reference sign 7 in Fig. 3) is preferably arranged on at least the sewed portions of the designing face. Arrangement of a member that covers at least the sewed portions makes it possible to further heighten effect of preventing leakage of raw material of polyurethane etc. from the sewed portions. A member covering the sewed portions is not especially limited as long as matching the shape of the sewed portions. This member has only to be metal, resin, wood, or the like.

According to the present invention, using the sheet-type molded body 1 makes it possible to easily prevent leakage of an adhesive, raw material of polyurethane foam, etc. from the sewed portions 7 at low cost even when the polyurethane foam layer 4 is laminated by any way as described above. The present invention also makes it possible to keep the above described effect even if, for example, the sheet-type molded body 1 is placed under a dry environment for a certain time (for example, 2 hours).

In the laminating step S2, the polyurethane foam layer 4 may be further backed with the base material 5. Having the base material 5 makes it possible to improve rigidity of the laminate. The base material 5 used in the present invention is not restricted. Known material such as metal and synthetic resin can be used therefor. A method of laminating the base material 5 is not restricted. The following methods can be given: after making the laminate of the sheet-type molded body 1 and the polyurethane foam layer 4, and the base material 5 individually, sticking them together by thermal fusion bonding or thermal bonding, or using a known adhesive; foaming polyurethane between the sheet-type molded body 1 and the base material 5 by the known method described above; and so on. The latter method is more preferable because having simpler steps, and making it possible to surely bond the polyurethane foam layer 4 and the base material 5 together in a case where even laminates of various shapes are obtained.

### (Removing Step S3)

The present invention may include the removing step S3 of, after the laminating step S2, removing at least part of the liquid with which the thread is impregnated. Including the removing step S3 makes it possible to provide the laminate 10 from which at least part of the liquid with which the thread is impregnated is removed.

A way of the removing step S3 is not restricted as long as at least part of the liquid with which the thread is impregnated can be removed. Examples thereof include a way of air-drying or heating the laminate 10 obtained by the producing method S10 of the present invention, to remove at least part of the liquid with which the thread is impregnated. When the laminate 10 is heated to remove the liquid, the step is preferably carried out within the temperature range that can keep the quality of the laminate 10. For example, this temperature range is preferably 40 to 100°C.

### Examples

Hereinafter, the present invention will be described in more detail in the examples. The present invention is not restricted to the examples. "Part" and "%" used herein will be by mass unless otherwise specified.

### <Evaluation of Confirmation of Urethane Leakage>

A laminate formed by laminating a polyurethane foam layer to a sheet-type molded body that was obtained by sewing a sheet using predetermined thread was made as described below. The number of stitches under each condition was counted, and how many stitches which urethane leaked from was visually confirmed. Here, "urethane leakage" indicates that urethane could be seen from a stitched part of a designing face. The number of stitches where this urethane leakage occurred was divided by the total number of the stitches, to calculate the proportion of occurrence of the urethane leakage. The results are shown in Table 2. If the proportion of occurrence of the urethane leakage is lower than 15%, it can be said that the urethane leakage can be prevented.

### (Example 1)

### <Making Sheet>

The components other than the plasticizers and the dusting agent among the mixing components shown in Table 1 were put into a Henschel mixer, to be mixed. When the temperature of the mixture rose to 80°C, the plasticizers were added, and thereafter the mixture was dried up (this led to a state where the plasticizers were absorbed into vinyl chloride resin particles, which makes the mixture powdery). After that, when the composition was cooled to no more than 70°C, the vinyl chloride resin made by emulsion polymerization, which is the dusting agent, was added, to prepare a vinyl chloride resin composition for powder molding.

The vinyl chloride resin composition for powder molding was sprinkled over a mold for texturing which was heated to 250°C, and the mold was left to stand for a time that was adjusted so that the thickness of a vinyl chloride resin molded sheet was 1 mm (specifically, 8 to 18 seconds), to melt the composition. After that, excess of the composition was shaken off, and the mold was left to stand still in an oven whose temperature was set at 200°C. When 60 seconds had passed after that, the mold was cooled by water, and when the temperature of the mold was cooled to 40°C, a vinyl chloride resin molded sheet of 150 mm×200 mm×1 mm in thickness (hereinafter referred to as "sheet") was detached from the mold.

### <Impregnating Step>

After the weight of a bobbin only was measured, Ace Crown for vehicles #8 was wound around the bobbin, and the weight of the whole of the bobbin was measured. After that, a plasticizer (TRIMEX N-08, boiling point = 430°C, manufactured by Kao Corporation) was dripped by a dropper from a side face of the bobbin, to impregnate the thread with the plasticizer. The weight of the whole of the bobbin after the thread was impregnated with the plasticizer was measured, to calculate the impregnation rate of the liquid for the thread. The calculated impregnation rate is shown in Table 2.

### <Sewing Step>

The sheet was sewed just after the impregnating step. A sewing machine used here was LU-2860-7 manufactured by JUKI Corporation. Concerning sewing thread, Ace Crown for vehicles #5 was used as upper thread, and Ace Crown for vehicles #8 which was impregnated with the liquid in the above impregnating step was used as lower thread. The interval of stitches was 3 stitches/cm, and the speed was 3.3 stitches/sec. The sheet was sewed by approximately 9 to 10 cm in length. The molded sheet was sewed three times under these requirements (sewing number: 1 to 3), to make a sheet-type molded body according to Example 1.

### <Laminating Step>

An aluminum plate of 250 mm×340 mm×2 mm was placed over the bottom of a mold of 200 mm×300 mm×10 mm, and two obtained sheet-type molded bodies were temporarily fixed severally to a cover of 348 mm×255 mm×10 mm of the mold so that textured surfaces thereof were on the cover side. A mixed solution was made by mixing a polyol mixture consisting of 50 parts by mass of a propylene glycol PO/EO block adduct (hydroxyl value 28, terminal EO unit content 10%, internal EO unit content 4%), 50 parts by mass of a glycerin PO/EO block adduct (hydroxyl value 21, terminal EO unit content 14%), 2.5 parts by mass of water, 0.2 parts by mass of an ethylene glycol solution of triethylenediamine (product name: TEDA-L33, manufactured by Tosoh Corporation), 1.2 parts by mass of triethanolamine, 0.5 parts by mass of triethylamine, and 0.5 parts by mass of a foaming agent (product name: F-122, manufactured by Shin-Etsu Chemical Co., Ltd.), with polymethylene polyphenylene polyisocyanate (polymeric MDI), so that the mixing index was 98. This mixed solution was poured onto the mold, and the mold was hermetically sealed with the above described cover, to which the sheet-type molded bodies were temporarily fixed. Five minutes later, a laminate that was a sample of backing a skin constituted by the sheet-type molded body of 1 mm in thickness with polyurethane foam of 9 mm in thickness and 0.18 g/cm³ in density, and the aluminum plate in this order was taken out of the mold.

### <Removing Step>

The laminate obtained by the laminating step was air-dried, to remove at least part of the liquid with which the thread was impregnated, to obtain a laminate according to the example 1.

### (Example 2)

A laminate according to the example 2 was made in the same way as the example 1 except that the liquid with which the thread was impregnated used in the example 1 was changed from the plasticizer to water (boiling point = 100°C, ion-exchanged water).

### (Comparative Example 1)

A laminate according to the comparative example 1 was made in the same way as the example 1 except that the impregnating step in the example 1 was excluded.

**Table 1**

| Resin Composition | Mixed | Name of Raw Material | Manufactured by | Origin |
|---|---|---|---|---|
| Vinyl Chloride Resin | 100 | ZEST 2000Z | Shin Dai-ichi Vinyl Corp. | Suspension Polymerization Vinyl Chloride Resin Particle (average degree of polymerization: 2000, average particle size: 130 µm) |
| Plasticizer | 115 | TRIMEX N-08 | Kao Corp. | Trimellitate-based Plasticizer (n-C₈,C₁₀TOTM) |
| | 5 | ADK CIZER O-130S | ADEKA Corp. | Epoxidized Soybean Oil (ESBO) |
| Stabilizer | 4.5 | ALCAMIZER 5 | Kyowa Chemical Industry Co., Ltd. | Perchloric Acid-partially Introduced Hydrotalcite (90%HClO₄-treated hydrotalcite) |
| | 2.4 | MIZUKALIZER DS | Mizusawa Industrial Chemicals, Ltd. | Zeolite (Na-Zeolite) |
| | 0.5 | Karenz DK-1 | Showa Denko K.K. | β-diketone (stearoylbenzoylmethane) |
| | 0.2 | SAKAI SZ2000 | SAKAI CHEMICAL INDUSTRY CO.,LTD. | Zinc Stearate |
| Dusting Agent | 20 | ZEST PQLTX | Shin Dai-ichi Vinyl Corp. | Emulsion Polymerization Vinyl Chloride Resin (average degree of polymerization: 800, average particle size: 2 µm) |
| Pigment | 4 | DA PX 1720(A) Black | Dainichiseika Color & Chemicals Mfg. Co., Ltd. | Coloring Agent |
| Sum Total | 251.6 | | | |

**Table 2**

| | Sewing No. | Stitches | Urethane Leakage | Proportion of Occurrence | Impregnation Rate |
|---|---|---|---|---|---|
| Ex. 1 | 1 | 22 | 0 | 0% | 26 wt.% |
| | 2 | 23 | 0 | | |
| | 3 | 24 | 0 | | |
| | Total | 69 | 0 | | |
| Ex. 2 | 1 | 26 | 0 | 0% | 33 wt.% |
| | 2 | 27 | 0 | | |
| | 3 | 26 | 0 | | |
| | Total | 79 | 0 | | |
| Comp. Ex. 1 | 1 | 25 | 11 | 52% | 0 wt.% |
| | 2 | 20 | 14 | | |
| | 3 | 17 | 7 | | |
| | Total | 62 | 32 | | |

As shown in Table 2, no urethane leakage occurred to both laminates according to the examples 1 and 2. On the other hand, the proportion of occurrence of the urethane leakage to the laminate according to the comparative example 1 was high.

### <Experiment of Drying Sheet-type Molded Body>

### (Example 3)

A laminate according to the example 3 was made in the same way as the example 1 except that the sheet-type molded body obtained in the same way as the example 1 was dried at 40°C for 2 hours before the laminating step.

### (Example 4)

A laminate according to the example 4 was made in the same way as the example 2 except that the sheet-type molded body obtained in the same way as the example 2 was dried at 40°C for 2 hours before the laminating step.

Evaluation of confirmation of urethane leakage was carried out on the laminates according to the examples 3 and 4 in the same way as described above. The results are shown in Table 3. No impregnation rate was calculated in the examples 3 and 4 because the sheet-type molded bodies were dried after being made.

**Table 3**

| | Sewing No. | Stitches | Urethane Leakage | Proportion of Occurrence |
|---|---|---|---|---|
| Ex. 3 | 1 | 24 | 0 | 3% |
| | 2 | 25 | 2 | |
| | 3 | 23 | 0 | |
| | Total | 72 | 2 | |
| Ex. 4 | 1 | 27 | 7 | 13% |
| | 2 | 26 | 2 | |
| | 3 | 29 | 2 | |
| | Total | 82 | 11 | |

The proportion of occurrence of the urethane leakage to the laminate according to the example 3 was extremely low compared with the laminate according to the comparative example 1. The proportion of occurrence of the urethane leakage to the laminate according to the example 4 also took a largely low value compared with the laminate according to the comparative example 1. From these results, it is confirmed that the urethane leakage can be prevented according to the sheet-type molded body obtained by the impregnating step and the sewing step even if the laminating step is carried out after the body is left under a drying condition for a certain time. It is considered that the difference in proportion of occurrence of the urethane leakage between the examples 3 and 4, which was confirmed in this drying experiment, was due to the difference in boiling point. Thus, it can be said that when the present invention is carried out, a liquid of a high boiling point can be preferably used if a long time is needed since the impregnating step till the laminating step.

### Reference Signs List

1 sheet-type molded body
2 sheet
3 thread
3a upper thread
3b lower thread
4 polyurethane foam layer
5 base material
6 recessed groove
7 sewed portions
10 laminate

## Claims

1. A method (S10) for producing a laminate (10), the method (S10) comprising:
sewing (S1a) a sheet (2) using thread (3);
impregnating (S1b) at least part of the thread (3) with liquid before, after, or during said sewing (S1a); and
laminating (S2) a polyurethane foam layer (4) to at least one surface of a sheet-type molded body (1) that is obtained by said sewing (S1a) and said impregnating (S1b); **characterized in that** a boiling point of the liquid is 150 to 1000°C.

2. The method (S10) according to claim 1, wherein
in said impregnating (S1b), at least part of the thread (3) is impregnated with the liquid, the part being in the vicinity of at least a portion of the sheet-type molded body (1), the portion through which the thread (3) is to penetrate/penetrates/is penetrating.

3. The method (S10) according to claim 1 or 2, wherein said impregnating (S1b) is carried out before said sewing (S1a).

4. The method (S10) according to any one of claims 1 to 3, further comprising:
after said laminating (S2), removing (S3) at least part of the liquid with which the thread (3) is impregnated.

5. The method (S10) according to any one of claims 1 to 4, wherein a resin composition for powder molding is subjected to powder slush molding, to be the sheet (2).

6. The method (S10) according to claim 5, wherein the resin composition for powder molding is a vinyl chloride resin composition for powder molding which contains vinyl chloride resin.

7. The method (S10) according to claim 6, wherein an average degree of polymerization of the vinyl chloride resin is 800 to 5000.

8. The method (S10) according to claim 6 or 7, wherein the resin composition for powder molding contains 30 to 200 parts by mass of a plasticizer, to 100 parts by mass of the vinyl chloride resin.

9. The method (S10) according to claim 1, wherein the liquid is a plasticizer.

10. The method (S10) according to any one of claims 1 to 9, wherein an impregnation rate of the liquid is 0.1 to 50 wt.%.

11. The method (S10) according to any one of claims 1 to 10, wherein
the thread (3) consists of upper thread (3a) and lower thread (3b), and
in said impregnating (S1b), at least part of the lower thread (3b) among the upper (3a) and lower thread (3b) is impregnated with the liquid.

## Patentansprüche

1. Verfahren (S10) zur Herstellung eines Laminats (10), wobei das Verfahren:
Nähen (S1a) eines Tuches (2) unter Verwendung eines Fadens (3);
Imprägnieren (S1b) mindestens eines Teils des Fadens (3) mit einer Flüssigkeit vor, nach oder während des Nähens (S1a), und
Laminieren (S2) einer Polyurethanschaumschicht (4) auf mindestens eine Oberfläche eines Tuch-artig geformten Körpers (1), welcher durch das Nähen (S1a) und das Imprägnieren (S1b) erhalten wird, umfasst; **dadurch gekennzeichnet, dass** ein Siedepunkt der Flüssigkeit 150 bis 1000°C beträgt.

2. Verfahren (S10) nach Anspruch 1, wobei während des Imprägnierens (S1b) mindestens ein Teil des Fadens (3) mit der Flüssigkeit imprägniert wird, wobei der Teil sich in der Nachbarschaft mindestens eines Teils des Tuch-artig geformten Körpers (1) befindet, und wobei der Teil jener Teil ist, durch welchen der Faden (3) dringen soll/dringt/dringt.

3. Verfahren (S10) nach Anspruch 1 oder 2, wobei das Imprägnieren (S1b) vor dem Nähen (S1a) ausgeführt wird.

4. Verfahren (S10) nach einem der Ansprüche 1 bis 3 ferner umfassend:
Entfernen (S3) mindestens eines Teils der Flüssigkeit mit welcher der Faden (3) imprägniert wird nach dem Laminieren (S2).

5. Verfahren (S10) nach einem der Ansprüche 1 bis 4, wobei eine Harzzusammensetzung zum Pulverformen einem Hohlkörpergießen eines Pulvers unterzogen wird, um das Tuch (2) zu werden.

6. Verfahren (S10) nach Anspruch 5, wobei die Harzzusammensetzung zum Pulverformen eine Vinylchloridharzzusammensetzung zum Polverformen ist, welche ein Vinylchloridharz enthält.

7. Verfahren (S10) nach Anspruch 6, wobei der durchschnittliche Polymerisationsgrad des Vinylchloridharzes 800 bis 5000 beträgt.

8. Verfahren (S10) nach Anspruch 6 oder 7, wobei die Harzzusammensetzung für das Pulverformen 30 bis 200 Massenteile eines Weichmachers zu 100 Massenteilen des Vinylchloridharzes enthält.

9. Verfahren (S10) nach Anspruch 1, wobei die Flüssigkeit ein Weichmacher ist.

10. Verfahren (S10) nach einem der Ansprüche 1 bis 9, wobei die Imprägnierrate der Flüssigkeit 0.1 bis 50 Gew.-% beträgt.

11. Verfahren (S10) nach einem der Ansprüche 1 bis 10, wobei
der Faden (3) aus einem oberen Faden (3a) und einem unteren Faden (3b) besteht, und während des Imprägnierens (S1b) mindestens ein Teil des unteren Fadens (3b) entlang des oberen Fadens (3a) und des unteren Fadens (3b) mit der Flüssigkeit imprägniert ist.

## Revendications

1. Procédé (S10) pour produire un stratifié (10), le procédé (S10) comportant les étapes consistant à :
coudre une feuille (2) en utilisant un fil (3),
imprégner (S1b) au moins une partie du fil (3) avec du liquide avant, après ou pendant ladite couture (S1a), et
laminer (S2) une couche de mousse de polyuréthanne (4) sur au moins une surface d'un corps moulé de type feuille (1) qui est obtenu par ladite couture (S1a) et ladite imprégnation (S1b), **caractérisé en ce qu'**un point d'ébullition du liquide est de 150 à 1 000 °C.

2. Procédé (S10) selon la revendication 1, dans lequel
pendant ladite imprégnation (S1b), au moins une partie du fil (3) est imprégnée du liquide, la partie étant au voisinage d'au moins une portion du corps moulé de type feuille (1), portion à travers laquelle le fil (3) doit pénétrer/pénètre/est en train de pénétrer.

3. Procédé (S10) selon la revendication 1 ou 2, dans lequel ladite imprégnation (S1b) est exécutée avant ladite couture (S1a).

4. Procédé (S10) selon l'une quelconque des revendications 1 à 3, comportant en outre l'étape consistant à :
après ledit laminage (S2), retirer (S3) au moins une partie du liquide dont le fil (3) est imprégné.

5. Procédé (S10) selon l'une quelconque des revendications 1 à 4, dans lequel une composition de résine pour un moulage à partir de poudres est soumise à un moulage par embouage à partir de poudres, pour devenir la feuille (2).

6. Procédé (S10) selon la revendication 5, dans lequel la composition de résine pour un moulage à partir de poudres est une composition de résine de chlorure de vinyle pour un moulage à partir de poudres qui contient de la résine de chlorure de vinyle.

7. Procédé (S10) selon la revendication 6, dans lequel un degré moyen de polymérisation de la résine de chlorure de vinyle est de 800 à 5 000.

8. Procédé (S10) selon la revendication 6 ou 7, dans lequel la composition de résine pour un moulage à partir de poudres contient de 30 à 200 parties en masse d'un plastifiant, sur 100 parties en masse de la résine de chlorure de vinyle.

9. Procédé (S10) selon la revendication 1, dans lequel le liquide est un plastifiant.

10. Procédé (S10) selon l'une quelconque des revendications 1 à 9, dans lequel un taux d'imprégnation du liquide est de 0,1 à 50 % en poids.

11. Procédé (S10) selon l'une quelconque des revendications 1 à 10, dans lequel
le fil (3) est constitué d'un fil supérieur (3a) et d'un fil inférieur (3b), et
pendant ladite imprégnation (S1b), au moins une partie du fil inférieur (3b) parmi les fils supérieur (3a) et inférieur (3b) est imprégnée du liquide.
